# EUROPÄISCHE PATENTSCHRIFT

(11) **EP 2 202 597 B1**
(45) Veröffentlichungstag und Bekanntmachung des Hinweises auf die Patenterteilung: **14.11.2012**
(21) Anmeldenummer: 09015458.4
(22) Anmeldetag: 15.12.2009
(51) Int. Cl.: G05B 19/416

(54) **Verfahren zum Betrieb einer Verpackungsmaschine mit wenigstens zwei bewegbaren Einheiten, sowie Verpackungsmaschine**
Method for operating a packing machine with at least two mobile units and packing machine
Procédé de fonctionnement d'une machine à emballer dotée d'au moins deux unités mobiles et machine à emballer

(30) Priorität: 29.12.2008 DE 102008063190
(43) Veröffentlichungstag der Anmeldung: 30.06.2010
(73) Patentinhaber: Robert Bosch GmbH, 70469 Stuttgart (DE)
(72) Erfinder: Koehl, Alexander, 97816 Lohr (DE); Koehler, Volker, 63831 Wiesen (DE)
(74) Vertreter: Thürer, Andreas

(56) Entgegenhaltungen:
- EP-A1- 0 400 663
- EP-A2- 0 957 283
- EP-A2- 1 221 640
- US-A1- 2002 175 650
- US-A1- 2003 136 086

## Beschreibung

### Beschreibung

Die vorliegende Erfindung betrifft ein Verfahren zum Betrieb einer Vorrichtung mit wenigstens zwei bewegbaren Einheiten nach dem Oberbegriff des Patentanspruchs 1, eine entsprechende Vorrichtung, ein entsprechendes Computerprogramm sowie ein entsprechendes Computerprogrammprodukt.

Obwohl nachfolgend hauptsächlich auf Verpackungsmaschinen Bezug genommen wird, ist die Erfindung nicht darauf beschränkt, sondern vielmehr auf alle Arten von Vorrichtungen gerichtet, bei der sich wenigstens zwei Einheiten aufgrund unterschiedlicher Eigengeschwindigkeiten aufeinander zu bewegen, insbesondere solche Vorrichtungen, bei denen wenigstens eine Einheit eine aufholende bzw. einholende Bewegung in Bezug auf eine andere Einheit vollführt. Die Erfindung ist aber insbesondere bei Verpackungsmaschinen einsetzbar, die eine einer Produktionsmaschine nachgeordnete Beladestation aufweisen, durch die zyklisch bewegbare Transporteinrichtungen beladen werden, und die ferner eine Entladestation aufweisen, an der eine Entladung der Transporteinrichtungen erfolgt. Insbesondere ist die Erfindung bei Verpackungsmaschinen, welche einen sogenannten Zweizug aufweisen verwendbar, wie unten dargestellt.

### Stand der Technik

Ein sogenannter Zweizug dient bei Verpackungsmaschinen zum Gruppieren von Produkten (Packgutartikeln). In einer entsprechenden Verpackungsmaschine erzeugt eine vorgelagerte Maschine einen (nahezu) konstanten Produktstrom. Der Produktstrom wird durch eine Aufteilung auf einzelne Transporteinheiten portioniert. Ein entsprechender Zweizug, der zwei als "Züge" bezeichnete Transporteinrichtungen aufweist, ist so eingerichtet, dass ein Zug an einer Beladeposition bereitstellbar ist, dort die Produkte aufnehmen kann, und nach der Beladung zu einer Entladestation verfahrbar ist. An der Entladestation wird der Zug entladen, wobei in der Regel die Packgutartikel des Zuges in eine Verpackung, beispielsweise einen Karton, befördert werden. Gleichzeitig mit dem Verfahren eines ersten Zuges wird ein zweiter Zug an der Beladestation bereitgestellt. Nach Abschluss der Entladung muss der erste Zug schnellstmöglich wieder zur Beladeposition (Beladestation) bewegt werden, um dort auf den zweiten Zug aufzuschließen, der momentan dort noch beladen wird.

In der Regel sind die Züge eines Zweizugs so eingerichtet, dass sie mit mehreren einzelnen Packgutartikeln beladbar sind. Ein Zug, der an der Beladestation beladen wird, verfährt dabei zur jeweiligen Aufnahme eines weiteren Packgutartikels eine definierte Distanz weiter. Der Zug kann dabei mit Fächern versehen sein, die nacheinander an der Beladestation befüllt werden. Ist der Zug vollständig beladen, verfährt dieser, wie oben dargestellt, zu der Entladeposition und wird dort entladen.

In entsprechenden verpackungsmaschinen muss dabei stets sichergestellt werden, dass ein Zug an der Beladeposition zur Verfügung steht, da andernfalls die kontinuierliche Bereitstellung von Produkten durch die vorgelagerte Maschine verzögert werden könnte. Die Bewegung eines Zuges von der Entladestation zur Beladestation, bei dem ferner ein Aufschließen auf den dort momentan beladenen Zug erfolgen muss, ist häufig ein begrenzender Faktor für die Produktrate einer entsprechenden Maschine. Diese muss daher schnellstmöglich erfolgen. Ferner muss der nachfolgende Zug oft mit einem sehr geringen Abstand zum Zug an der Beladestation aufschließen und darf keinesfalls überschwingen, d.h. zu weit in Richtung des anderen Zuges gelangen, da dies zu einer Kollision führen würde.

In diesem Zusammenhang sei unter "Vorderzug" oder "vorauseilender Zug" der Zug verstanden, der an der Beladestation beladen wird, und der sich im Stillstand befindet bzw. sich zur Beladung der einzelnen Fächer vorwärtsbewegt. Unter "Folgezug" oder "nachfolgender Zug" sei entsprechend der Zug verstanden, der zu diesem Vorderzug aufschließt, um anschließend an den Vorderzug beladen zu werden.

Im Stand der Technik verfährt ein Folgezug in der Regel mit größtmöglicher Geschwindigkeit in Richtung des Vorderzuges und wird dann mit einer maximalen Bremsrate abgebremst, so dass er in einer definierten Position in Bezug auf den Vorderzug zum Stillstand kommt. In entsprechenden Verpackungsmaschinen bereiten daher insbesondere solche Situationen Probleme, in denen ein Vorderzug eine nicht exakt definierte Position aufweist, wenn ein Folgezug zu ihm aufschließen soll. Dies kann beispielsweise dann der Fall sein, wenn sich der Vorderzug im Moment des Aufschließens oder nach dem Einleiten der Bremsung des Folgezugs von einem Fach in Richtung des nächsten Faches weiterbewegt oder wenn dieser in unterschiedlichen Fachpositionen beladen wird.

Bewegt sich ein Vorderzug nach dem Einleiten der Bremsung weiter, kommt der nachfolgende Zug zu früh zum Stillstand. Entsprechend muss der aufholende Zug dann eine zusätzliche Korrekturbewegung ausführen, um in die definierte Distanz zu dem Vorderzug zu gelangen. Diese Korrekturbewegung erfordert zusätzliche Zeit und Energie. Ferner führt die Korrekturbewegung dazu, dass der Zug mehr Zeit benötigt, um den Vorderzug zu erreichen. Dadurch sinkt, wie bereits oben erläutert, die Produktleistung der Maschine.

Die EP 0 400 633 A1 offenbart eine Fördereinrichtung mit Linearmotoren, die für jede Arbeitsstation eines Transportbandes mit einer Mehrzahl von Arbeitsstationen vorgesehen sind. Eine Steuereinrichtung, die den Betrieb von zwei Linearmotoren steuert, wenn die beiden Linearmotoren Gegenstände zwischen benachbarten Arbeitsstationen fördern, ist für jeweils zwei benachbarte Stationen vorgesehen.

Die US 2002/175650 A1 offenbart ein Verfahren zur Steuerung eines Schrittmotors, der ein Objekt von einer Ausgangsposition über eine Zieldistanz bewegt. Dieses beinhaltet die Berechnung einer Distanz, die sich das Objekt bewegt hat, die Berechnung einer verbleibenden Distanz des Objekts, die Aktualisierung eines ersten Geschwindigkeitswerts, bis die Distanz, die sich das Objekt bewegt hat, größer als ein erster Referenzwert ist, die Aktualisierung eines ersten Positionswerts, der die momentane Position des beschleunigten Objekt anzeigt, indem der aktualisierte erste Geschwindigkeitswert zu dem ersten Positionswert addiert wird, die Aktualisierung eines zweiten Geschwindigkeitswerts, wenn die verbleibende Distanz geringer als der zweite Referenzwert ist, indem ein zweiter Beschleunigungswert von der zweiten Geschwindigkeit subtrahiert wird, und die Aktualisierung eines zweiten Positionswerts, der die momentane Position des verlangsamten Objekts anzeigt, indem der aktualisierte zweite Geschwindigkeitswert zu dem zweiten Positionswert addiert wird.

Die US 2003/01366086 A1 offenbart eine Verpackungsmaschine mit zyklisch angeordneten, bewegbaren Transporteinheiten.

Der Erfindung liegt daher die Aufgabe zugrunde, verbesserte Maßnahmen anzugeben, die die genannten Nachteile des Standes der Technik überwinden.

Diese Aufgabe wird gelöst durch ein Verfahren zum Betrieb einer Vorrichtung mit wenigstens zwei bewegbaren Einheiten, eine entsprechende Vorrichtung, eine Recheneinheit, ein Computerprogramm sowie ein Computerprogrammprodukt mit den Merkmalen der unabhängigen Patentansprüche. Vorteilhafte Weiterbildungen sind Gegenstand der Unteransprüche sowie der nachfolgenden Beschreibung.

### Vorteile der Erfindung

Erfindungsgemäß wird ein Verfahren zum Betrieb einer Vorrichtung mit wenigstens zwei bewegbaren Einheiten vorgeschlagen, bei der wenigstens eine zweite, aufholende Einheit mit einer zweiten Bewegungsgeschwindigkeit in Richtung wenigstens einer ersten Einheit bewegt und durch Abbremsen mit einer Bremsrate in einen vorbestimmten Abstand zu der wenigstens einen ersten Einheit gebracht wird, und die Bremsrate während der Bewegung der wenigstens einen zweiten Einheit in Abhängigkeit von einer Distanz der wenigstens einen zweiten Einheit zu wenigstens einer ersten Einheit wenigstens einmal neu bestimmt wird.

Dieses Verfahren ermöglicht also durch die Anpassung der Bremsrate (Verzögerungsrampe) einer aufholenden Einheit auf eine sich bewegende oder sich bewegt habende vorauseilende Einheit eine schnelle Positionierung, ohne dass die nachfolgende Einheit mit der vorauseilenden Einheit kollidiert. Hierdurch kann ein Zeit- und energieoptimaler Aufschließvorgang erzielt werden.

Das Verfahren kann insbesondere unter den Randbedingungen eingesetzt werden, dass der vorauseilende Zug sich einerseits nur in positive Richtung (d.h. gleichgerichtet zu der nachfolgenden Einheit) bewegt, oder sich im Stillstand befindet, und der aufschließende Zug sich andererseits in positiver Richtung mit höherer Geschwindigkeit als der vorauseilende Zug bewegt.

Gemäß einer besonders bevorzugten Ausgestaltung weist das Verfahren die folgenden Schritte auf:
a) Bestimmen eines Ausgangsbremswegs der wenigstens einen zweiten Einheit anhand einer Ausgangsbremsrate,
b) Bestimmen der momentanen Distanz der wenigstens einen ersten Einheit zu der wenigstens einen zweiten Einheit,
c) Bestimmen eines ersten Abstands aus der in Schritt b) bestimmten momentanen Distanz und dem vorbestimmten Abstand,
d) Vergleichen des in Schritt a) bestimmten Ausgangsbremswegs mit dem in Schritt c) bestimmten ersten Abstand,
e) Einleiten einer Abbremsung der wenigstens einen zweiten Einheit mit der Ausgangsbremsrate, falls der in Schritt a) bestimmte Ausgangsbremsweg größer oder gleich dem in Schritt c) bestimmten ersten Abstand ist, oder Wiederholen der Schritte b) bis d) nach einem ersten Zeitintervall, falls der in Schritt b) bestimmte Ausgangsbremsweg geringer als der in Schritt c) bestimmte erste Abstand ist,
f) Erneutes Bestimmen der momentanen Distanz der wenigstens einen ersten Einheit zu der wenigstens einen zweiten Einheit während der Abbremsung,
g) Bestimmen eines zweiten Abstands aus der in Schritt f) bestimmten momentanen Distanz und dem vorbestimmten Abstand,
h) Bestimmen einer angepassten Bremsrate anhand eines angepassten Bremswegs, wobei der angepasste Bremsweg dem in Schritt g) bestimmten zweiten Abstand entspricht,
i) Verändern der Abbremsung durch Verwenden der in Schritt h) bestimmten angepassten Bremsrate,
j) Wiederholen der Schritte f) bis i) nach einem zweiten Zeitintervall.

Mit anderen Worten berechnet ein aufholender Zug also während seiner Bewegung zyklisch den Bremsweg bis zum Stillstand, wobei eine vom Anwender vorgegebene maximale Verzögerung (maximale Bremsrate) vorgesehen sein kann. Wird der Abstand zwischen den Zügen kleiner oder gleich diesem Bremsweg, so wird eine Verzögerungsrampe aktiv, d.h. eine Bremsung wird mit der Ausgangsbremsrate eingeleitet.

In der aktiven Verzögerungsrampe, d.h. nach Einleiten der Abbremsung wird nun permanent zyklisch die Bremsrampe (Bremsrate) angepasst. Bleibt der voreilende Zug im Stillstand, so bleibt die maximale Verzögerung (Ausgangsbremsrate) weiter wirksam, bis der voreilende Zug (bzw. der definierte Abstand zu diesem) erreicht ist. Bewegt sich hingegen der voreilende Zug, so wird die Verzögerungsrampe entsprechend angepasst, um den zurückgelegten Weg des voreilenden Zuges zu kompensieren.

Es kann sich als besonders vorteilhaft erweisen, dass das erste und/oder das zweite vorgenannte Zeitintervall Null ist, und/oder dass wenigstens ein Zeitintervall einem Abfrageintervall entspricht. Wird das erste und/oder das zweite Zeitintervall auf Null gesetzt, wird hierdurch eine kontinuierliche Abfrage des Abstandes der Einrichtungen bewirkt. Hierdurch kann eine möglichst genaue Positionierung durch eine präzise Anpassung der Bremsraten erreicht werden. Andererseits kann bei einer Vergrößerung der Zeitintervalle, insbesondere dann, wenn die Genauigkeit der zu erzielenden Positionierung eine solche zulässt, eine Verringerung des Rechenaufwandes bewirkt werden.

Wie bereits vorstehend teilweise erläutert, kann das Verfahren besonders vorteilhaft dann eingesetzt werden, wenn sich die wenigstens eine erste Einheit wenigstens zeitweise mit einer ersten Bewegungsgeschwindigkeit bewegt. Im Falle von Verpackungsmaschinen wird die Bewegungsrichtung der ersten Einheit (Vorderzug) dabei der Bewegungsrichtung der zweiten Einheit (Folgezug) entsprechen, d.h. es findet eine gleichgerichtete Bewegung statt. Die Bewegung der zweiten Einheit erfolgt hierbei schneller als die der ersten Einheit. Hierdurch holt die zweite Einheit die erste Einheit ein. In anderen Fällen kann jedoch auch denkbar sein, dass sich die erste Einheit in Gegenrichtung zu der zweiten Einheit bewegt, wodurch dann eine adaptive Erhöhung der Bremsrate erforderlich wird. Insbesondere kann sich das Verfahren dann als vorteilhaft erweisen, wenn der vorbestimmte Abstand zwischen der ersten und der zweiten Einheit Null ist, das heißt, wenn die zweite Einheit in ihrer Endposition einen direkten Kontakt zu der ersten Einheit aufweist. In diesem Fall bestehen besonders hohe Anforderungen an eine exakte Positionierung der zweiten Einheit, da eine ungenaue Platzierung, d.h. insbesondere eine zu langsame Abbremsung, zu einer Kollision führt.

Vorteilhaft ist das Verfahren durchführbar in einer Verpackungsmaschine, bei der die wenigstens eine erste und die wenigstens eine zweite Einheit zyklisch angeordnete Transporteinheiten der Maschine sind, die an einer Beladeeinrichtung mit Packgut beladen werden, zu einer Entladeeinrichtung verfahren und an der Entladeeinrichtung entladen werden. Die entsprechende Vorrichtung weist vorteilhafterweise einen Zweizug auf.

In derartigen Verpackungsmaschinen wird vorteilhafterweise bei der Beladung einer ersten Einheit eine zweite Einheit durch Abbremsen gemäß dem hier dargestellten Verfahren stromaufwärts in den vorbestimmten Abstand zu der ersten Einheit angeordnet und nach dem Beladen der ersten Einheit ebenfalls beladen. Wie bereits zuvor dargestellt, bestehen die genannten Positionierungsprobleme insbesondere bei Verpackungsmaschinen, bei denen eine Portionierung des Verpackungsgutes von einer kontinuierlich arbeitenden stromaufwärts angeordneten Maschine vorgenommen werden muss.

Eine Vorrichtung, insbesondere eine Verpackungsmaschine, die zur Durchführung des erläuterten Verfahrens eingerichtet ist, ist ebenfalls Gegenstand der Erfindung. Zu den Vorteilen und Merkmalen der erfindungsgemäßen Vorrichtung sei auf die zuvor geschilderten Vorteile und Merkmale des erfindungsgemäßen Verfahrens ausdrücklich hingewiesen.

Vorteilhafterweise weist eine entsprechende Vorrichtung wenigstens zwei Transporteinheiten, wenigstens eine Beladeeinrichtung zur Beladung der Transporteinheit und wenigstens eine Entladeeinrichtung zur Entladung der Transporteinheiten, Antriebsmittel zum zyklischen Transportieren der Transporteinheiten und Bremsmittel zum Abbremsen wenigstens einer Transporteinheit entsprechend einem Verfahren wie zuvor erläutert auf.

Eine Recheneinheit, die dazu eingerichtet ist, das genannte Verfahren durchzuführen, ist ebenfalls Gegenstand der Erfindung. Eine erfindungsgemäße Recheneinheit ist, insbesondere programmtechnisch, dazu eingerichtet, ein erfindungsgemäßes Verfahren unter Verwendung einer Verarbeitungsmaschine durchzuführen.

Die Erfindung betrifft zudem ein Computerprogramm mit Programmcodemitteln, um alle Schritte gemäß einem erfindungsgemäßen Verfahren durchzuführen, wenn das Computerprogramm auf einem Computer oder einer entsprechenden Recheneinheit ausgeführt wird.

Das erfindungsgemäß vorgesehene Computerprogrammprodukt mit Programmcodemitteln, die auf einem computerlesbaren Datenträger gespeichert sind, ist zum Durchführen aller Schritte gemäß einem erfindungsgemäßen Verfahren ausgebildet, wenn das Computerprogramm auf einem Computer oder einer entsprechenden Recheneinheit ausgeführt wird. Geeignete Datenträger sind insbesondere Disketten, Festplatten, Flash-Speicher, EEPROMs, CD-ROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung schematisch dargestellt und wird im Folgenden unter Bezugnahme auf die Zeichnung ausführlich beschrieben.

### Figurenbeschreibung

- Figur 1: zeigt in schematischer Darstellung eine Vorrichtung, die für eine Durchführung eines erfindungsgemäßen Verfahrens gemäß einer besonders bevorzugten Ausführungsform geeignet ist.
- Figur 2: zeigt Geschwindigkeitsverläufe in einer Verpackungsmaschine entsprechend der Figur 1 gemäß dem Stand der Technik.
- Figur 3: zeigt Geschwindigkeitsverläufe in einer Verpackungsmaschine entsprechend der Figur 1, die mit einem Verfahren gemäß einer besonders bevorzugten Ausführungsform betrieben wird.
- Figur 4: zeigt ein Diagramm, das die Herleitung der Bremsraten für das erfindungsgemäße Verfahren gemäß einer besonders bevorzugten Ausführungsform veranschaulicht.

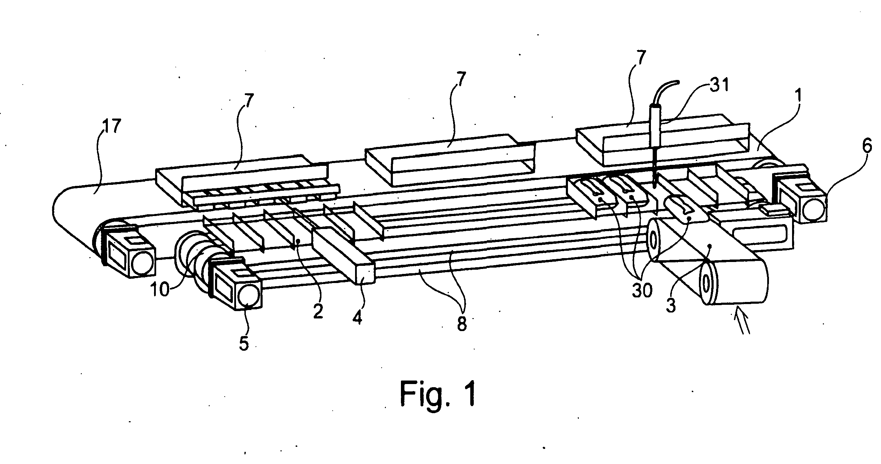

In Figur 1 ist eine Verpackungsmaschine, die für ein erfindungsgemäßes Verfahren geeignet ist, dargestellt und insgesamt mit 100 bezeichnet. Eine entsprechende Verpackungsmaschine weist einen sogenannten Zweizug 10 auf, der über zwei Züge 1, 2 verfügt.

In der Darstellung wird ein erster Zug 1 an einer Beladeeinrichtung 3 mit Packgutartikeln 30 beladen. Der Beladestation 3 vorgelagert befindet sich eine nicht dargestellte Produktionseinrichtung, die einen kontinuierlichen Produktstrom an Packgutartikeln bereitstellt. In der Abbildung befindet sich an einer Entladestation 4 ein zweiter Zug 2, der dort entladen wird, wobei die Verpackungsgutartikel simultan in einen Verpackungskarton 7 geschoben werden. Die Verpackungskartons werden durch ein Transportband 17 bereitgestellt. Im Zweizug 10 werden die Züge 1, 2 durch Transportbänder 8 bewegt. Ferner sind zwei Zugantriebe 5, 6 vorgesehen, die dazu in der Lage sind, die Züge 1, 2 unabhängig voneinander zu bewegen. Ebenso sind die Zugantriebe 5, 6 auch in der Lage, die Transportbänder abzubremsen. Eine Beladungskontrolleinrichtung 31 stellt eine ordnungsgemäße Beladung an der Beladestation 3 sicher. Hierbei kann es sich beispielsweise um einen optischen Sensor handeln.

Nachfolgend wird der Betrieb der Verpackungseinrichtung 100 erläutert.

An der Beladestation 3 werden kontinuierlich Verpackungsgutartikel 30 zugeführt. Ein erster Zug 1, der an der Beladestation 3 beladen wird, weist Fächer auf, die nacheinander beladen werden. Hierzu wird Zug 1 sukzessive um einen Fachabstand weiterbewegt. Die Beladekontrolleinrichtung 31 stellt hierbei sicher, dass eine Beladung sämtlicher Fächer durchgeführt wird. Ist Zug 1 vollständig beladen, wird dieser mit höchstmöglicher Geschwindigkeit zur Entladestation 2 transportiert und dort mit einem Verpackungskarton 7, der auf einem Band 17 bereitgestellt wird, ausgerichtet. Die Entladeeinrichtung 4 schiebt simultan sämtliche Verpackungsgutartikel in den Karton. Ist der Zug 2 entladen, wird er mit schnellstmöglicher Geschwindigkeit zyklisch zur Beladestation verfahren, um dort für eine weitere Beladung bereitzustehen. Insbesondere muss in einer entsprechenden Verpackungsmaschine sichergestellt sein, dass eine kontinuierliche Beladung von Transporteinrichtungen 1, 2 erfolgen kann, da andernfalls die vorgelagerte Produktionsmaschine zum Stillstand kommt bzw. die Verpackungseinrichtung überläuft. Bereits vor der vollständigen Beladung der Transporteinrichtung 1 muss also eine leere Transporteinrichtung (hier Transporteinrichtung 2) bereitstehen.

Zum Aufschließen der Transporteinrichtungen auf die an der Beladestation beladenen Transporteinrichtungen ist eine Verzögerung der Bewegung dieser Einrichtungen erforderlich. Diese Verzögerung wird durch die Zugantriebe 5 und 6 durchgeführt.

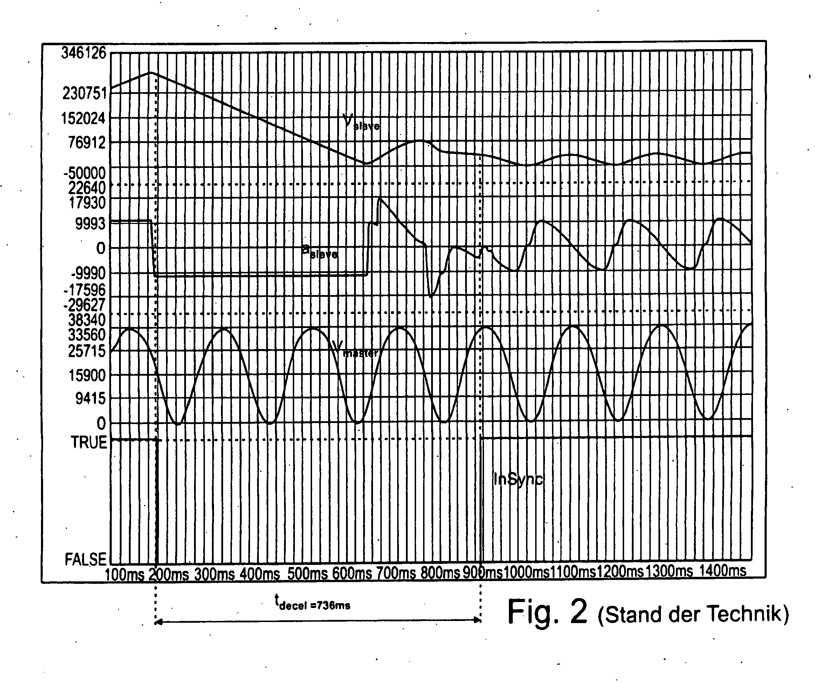

In Figur 2 sind Geschwindigkeits- und Beschleunigungsverläufe von Transporteinrichtungen von Verpackungsmaschinen gemäß dem Stand der Technik dargestellt. Mit "Slave" sei hierbei die aufholende Transporteinrichtung bzw. der Folgezug bezeichnet, mit "Master" die an der Beladestation vorgehaltene Transporteinrichtung bzw. der Vorderzug. Der mit vₘₐₛₜₑᵣ bezeichnete Graph in Figur 2 zeigt die zyklische Geschwindigkeitsänderung des Masters an der Beladestation. Diese Geschwindigkeitsänderung entspricht der Taktung des Masters, die zur Beladung der einzelnen Fächer verwendet wird.

In der Figur 2 wird etwa bei 160 ms eine Abbremsung des Slaves eingeleitet. Wie in dem mit aₛₗₐᵥₑ bezeichneten Graphen dargestellt, erfolgt die Verzögerung des Slaves etwa ab dem Zeitpunkt 160 ms mit einer konstanten negativen Beschleunigung, d.h. mit einer Abbremsrate. Die Abbremsung wird etwa bis zum Zeitpunkt 640 ms durchgeführt.

Im oberen, mit vₛₗₐᵥₑ bezeichneten Graphen der Figur 2 ist der Geschwindigkeitsverlauf des Slaves dargestellt. Nach Einleiten der Abbremsung bei 182 ms verlangsamt sich die Geschwindigkeit des Slaves hierbei linear. Zum Zeitpunkt 640 ms ist der Slave an der zunächst bestimmten Endposition angelangt. Da sich der Master jedoch während der Zeit seit der Einleitung der Abbremsung weiterbewegt hat, entspricht die Stillstandsposition des Slaves nicht dem erforderlichen Abstand zu dem Master, d.h. der Abstand zwischen Slave und Master ist zu groß. Daher wird nun eine erneute Beschleunigung des Slaves eingeleitet, die etwa bis zum Zeitpunkt 780 ms vorgenommen wird. Hiernach wird erneut abgebremst, bis schließlich zum Zeitpunkt 900 ms der korrekte Abstand eingestellt ist. Wie im unteren mit InSync bezeichneten Graphen der Figur 2 dargestellt, beträgt die Zeit vom Einleiten der ersten Bremsung bis zum Erreichen der korrekten Position des Slaves, t_{decel}, 736 ms.

Aus der Figur 2 lässt sich also entnehmen, dass zur Erreichung einer korrekten Positionierung des Slaves gemäß dem Stand der Technik mehrmalige Beschleunigungs- und Verzögerungsvorgänge erforderlich sind.

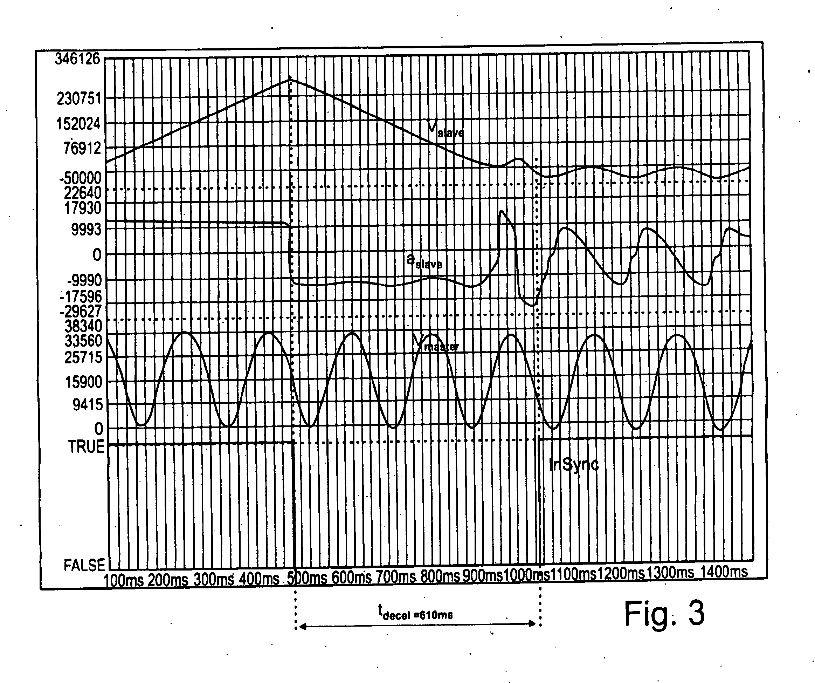

In Figur 3 sind Beschleunigungs- und Verzögerungsverläufe von Transporteinrichtungen gemäß einer bevorzugten Ausführungsform der vorliegenden Erfindung dargestellt. Die Bewegung des Masters vₘₐₛₜₑᵣ entspricht hierbei im wesentlichen der der Figur 2. Der Beschleunigungsverlauf des Slaves aₛₗₐᵥₑ unterscheidet sich jedoch von jenem der Figur 2, da hierbei eine adaptive Anpassung der Bremsung gemäß dem vorgeschlagenen Verfahren durchgeführt wird. Hierbei wird kontinuierlich der Abstand zu dem Master gemessen und die Abbremsung an diesen Abstand angepasst. In der Figur 3 kommt diese Anpassung in einem welligen Verlauf des Graphen der Verzögerung aₛₗₐᵥₑ zum Ausdruck. Die sich hieraus ergebende Geschwindigkeitsänderung des Slaves ist im oberen Graphen dargestellt und mit vₛₗₐᵥₑ bezeichnet.

Aus Figur 3 ist ersichtlich, dass bei der Verwendung des erfindungsgemäßen Verfahrens die Verzögerungszeit ab dem Einleiten der Bremsung bis zum Erreichen der korrekten Position t_{decel} nur noch 610 ms beträgt.

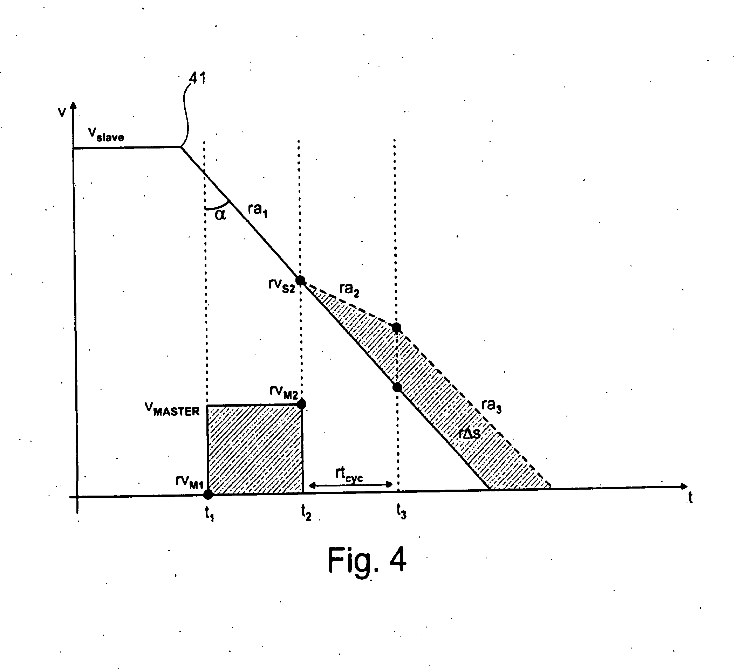

In Figur 4 ist das erfindungsgemäße Verfahren entsprechend einer bevorzugten Ausführungsform in einem Geschwindigkeits-Zeit-Diagramm veranschaulicht. Der Knick 41 im Verlauf der Geschwindigkeit des Slaves vₛₗₐᵥₑ entspricht hierbei jenem der Figuren 2 und 3 bei Einleiten der Verzögerung. Ab dem Einleiten der Verzögerung 41 entsprechenden Zeitpunkt erfolgt die Verzögerung mit einer ersten Verzögerungsrate ra₁. Das Zeitintervall zwischen t₁ und t₂ sowie zwischen t₂ und t₃ entspricht einer Zykluszeit rt_{cyc} der Vorrichtung. Nach dem Einleiten der Verzögerung des Slaves und zwischen dem Zeitpunkt t₁ und dem Zeitpunkt t₂ bewegt sich der Master mit einer Geschwindigkeit vₘₐₛₜₑᵣ. Durch den Geschwindigkeitsunterschied und die Zeitdifferenz zwischen den Punkten rv_{M1} und rv_{M2} ergibt sich eine Fläche, die in der Figur 4 schraffiert und mit rΔs bezeichnet ist.

Zum Zeitpunkt t₂ weist der Slave eine Geschwindigkeit rv_{S2} auf. Zu diesem Zeitpunkt wird nun die Distanz des Slaves zum Master'bestimmt und angepasst hieran eine angepasste Bremsrate ra₂ errechnet. Diese angepasste Bremsrate ra₂ wird nun für eine angepasste Bremsung, in der Figur durch die gestrichelte Linie zwischen den Zeitpunkten t₂ und t₃ veranschaulicht, verwendet.

Zum Zeitpunkt t₃ erfolgt erneut die Bestimmung des Abstandes des Masters und des Slaves. Da sich in diesem Fall zwischen dem Zeitpunkt t₂ und dem Zeitpunkt t₃ der Master nicht weiterbewegt hat, wird nun eine weitere Bremsrate ra₃ verwendet, deren Steigungswinkel a dem der Ausgangsbremsrate ra₁ entspricht. Die Fläche zwischen dem interpolierten Graphen der Ausgangsbremsrate ra₁ und den angepassten Bremsraten ra₂ und ra₃, in der Figur 4 schraffiert dargestellt, entspricht der vorbeschriebenen Fläche rΔs.

Die durch das erfindungsgemäße Verfahren in der Praxis erzielbaren Vorteile werden nun unter Bezugnahme auf eine Messung, wie sie auch in den Figuren 2 und 3 dargestellt ist, beschrieben. Die Messungen wurden hierbei bei einer Produktrate von 300 min⁻¹ in Form einer sinusförmigen Zugtaktung (unter schrittweisem Verfahren des Masters) vorgenommen. Als maximale Verzögerung wurden 10 m/s², als maximale Geschwindigkeit 5 m/s eingestellt.

In der nachfolgenden Tabelle sind die entsprechend der Figur 2 ermittelten Ergebnisse ohne Verwendung des erfindungsgemäßen Verfahrens und die entsprechend der Figur 3 ermittelten Ergebnisse unter Verwendung des erfindungsgemäßen Verfahrens entsprechend einer bevorzugten Ausführungsform dargestellt. Die dritte Spalte der Tabelle zeigt die prozentual erzielten Gewinne durch Verwendung des erfindungsgemäßen Verfahrens.

| | Stand der Technik | erfindungsgemäß | Gewinn |
|---|---|---|---|
| Zeit zum Aufschließen | 736 ms | 610 ms | 17 % |
| Normierten Motorverlustenergie ∫a²dt | 7.085094e+007 | 5.473022e+007 | 22,8 % |
| Normierte Beschleunigungsenergie ∫v·a dt | 5.918147e+007 | 1.834257e+007 | 69,0 % |

Aus der Tabelle ist ersichtlich, dass in der praktischen Anwendung eine adaptive Verzögerungsanpassung gemäß der vorliegenden Erfindung zu deutlicher Zeitersparnis (126 ms, d.h. 17%) führt, entsprechend derer nachfolgende Züge schneller auf voranstehende Züge aufschließen und damit die Maschinentaktrate gesteigert werden kann. Im konkreten Fall verringert sich die Verlustenergie im Motor durch das erfindungsgemäße Verfahren um 22,8%. Durch diese Verringerung kann bei bestimmten Anwendungsfällen gegebenenfalls ein kleinerer, kostengünstigerer Motor eingesetzt und hierdurch zusätzliche Energie eingespart werden. Die deutlichsten durch das erfindungsgemäße Verfahren erzielbaren Verbesserungen ergeben sich in der Beschleunigungsenergie, da der Aufholvorgang zur Korrektur einer Fehlposition, der von dem Slave eingeleitet werden muss, minimiert wird.

Es versteht sich, dass in den dargestellten Figuren nur beispielhafte Ausführungsformen der Erfindung dargestellt sind. Daneben ist jede andere Ausführungsform denkbar, ohne den Rahmen dieser Erfindung zu verlassen.

## Patentansprüche

1. Verfahren zum Betrieb einer Verpackungsmaschine mit wenigstens zwei zyklisch angeordneten, bewegbaren Transporteinheiten (1, 2), die an einer Beladeeinrichtung (3) mit Packgut beladen werden, zu einer Entladeeinrichtung (4) verfahren und an der Entladeeinrichtung (4) entladen werden, bei der eine zweite Transporteinheit (2) der wenigstens zwei Transporteinheiten (1, 2) mit einer zweiten Bewegungsgeschwindigkeit (vₛₗₐᵥₑ) in Richtung einer ersten Transporteinheit (1) der wenigstens zwei Transporteinheiten (1, 2) bewegt und durch Abbremsen mit einer Bremsrate (ra₁, ra₂) in einen vorbestimmten Abstand zu der ersten Transporteinheit (1) gebracht wird,
**dadurch gekennzeichnet, dass**
die Bremsrate (ra₁, ra₂) während der Bewegung der zweiten Transporteinheit in Abhängigkeit von einer Distanz der zweiten Transporteinheit (2) zu der ersten Transporteinheit (1) wenigstens einmal neu bestimmt wird.

2. Verfahren nach Anspruch 1, bei dem sich die erste Transporteinheit (1) wenigstens zeitweise mit einer ersten Bewegungsgeschwindigkeit (vₘₐₛₜₑᵣ) bewegt.

3. Verfahren nach Anspruch 2, bei dem die Bewegungsrichtung der ersten Transporteinheit (1) der Bewegungsrichtung der zweiten Transporteinheit (2) entspricht.

4. Verfahren nach einem der vorstehenden Ansprüche, bei dem der vorbestimmte Abstand Null ist.

5. Verfahren nach einem der vorstehenden Ansprüche, bei dem während der Beladung der ersten Transporteinheit (1) die zweite Transporteinheit (9) durch das Abbremsen mit der Bremsrate (ra₁, ra₂) stromaufwärts in dem vorbestimmten Abstand zu der ersten Transporteinheit (1) angeordnet wird und nach dem Beladen der ersten Transporteinheit (1) ebenfalls beladen wird.

6. Verfahren nach einem der vorstehenden Ansprüche, **gekennzeichnet durch** die folgenden Schritte:
a) Bestimmen eines Ausgangsbremswegs der zweiten Transporteinheit (2) anhand einer Ausgangsbremsrate (ra₁),
b) Bestimmen der momentanen Distanz der ersten Transporteinheit (1) zu der zweiten Transporteinheit (2),
c) Bestimmen eines ersten Abstands aus der in Schritt b) bestimmten momentanen Distanz und dem vorbestimmten Abstand,
d) Vergleichen des in Schritt a) bestimmten Ausgangsbremswegs mit dem in Schritt c) bestimmten ersten Abstand,
e) Einleiten einer Abbremsung der zweiten Transporteinheit mit der Ausgangsbremsrate (ra₁), falls der in Schritt a) bestimmte Ausgangsbremsweg größer oder gleich dem in Schritt c) bestimmten ersten Abstand ist, oder Wiederholen der Schritte b) bis d) nach einem ersten Zeitintervall, falls der in Schritt b) bestimmte Ausgangsbremsweg geringer als der in Schritt c) bestimmte erste Abstand ist,
f) Erneutes Bestimmen der momentanen Distanz der ersten Transporteinheit zu der zweiten Einheit während der Abbremsung,
g) Bestimmen eines zweiten Abstands aus der in Schritt f) bestimmten momentanen Distanz und dem vorbestimmten Abstand,
h) Bestimmen einer angepassten Bremsrate (ra₂) anhand eines angepassten Bremswegs der zweiten Transporteinheit, wobei der angepasste Bremsweg dem in Schritt g) bestimmten zweiten Abstand entspricht,
i) Verändern der Abbremsung **durch** Verwenden der in Schritt h) bestimmten angepassten Bremsrate (ra₂),
j) Wiederholen der Schritte f) bis i) nach einem zweiten Zeitintervall.

7. Verfahren nach Anspruch 6, bei dem das erste und/oder das zweite Zeitintervall Null ist und/oder wenigstens einem Abfrageintervall entspricht.

8. Verpackungsmaschine (100), die wenigstens zwei Transporteinheiten (1, 2), wenigstens eine Beladeeinrichtung (3) zur Beladung der Transporteinheiten (1, 2) und wenigstens eine Entladeeinrichtung (4) zur Entladung der Transporteinheiten (1, 2), Antriebsmittel (5, 6) zum zyklischen Transportieren der Transporteinheiten und Bremsmittel (5, 6) zum Abbremsen wenigstens einer Transporteinheit (1, 2) entsprechend einem Verfahren der Ansprüche 1 bis 7 aufweist.

9. Computerprogramm mit Programmcodemitteln, um alle Schritte eines Verfahrens nach einem der Ansprüche 1 bis 7 durchzuführen, wenn das Computerprogramm auf einem Computer oder einer entsprechenden Recheneinheit ausgeführt wird.

10. Computerprogrammprodukt mit Programmcodemitteln, die auf einem computerlesbaren Datenträger gespeichert sind, um alle Schritte eines Verfahrens nach einem der Ansprüche 1 bis 7 durchzuführen, wenn die Programmcodemittel auf einem Computer oder einer entsprechenden Recheneinheit ausgeführt werden.

## Claims

1. Method of operating a packaging machine having at least two cyclically arranged, movable transporting units (1, 2) which are loaded with articles at a loading device (3), are displaced to an unloading device (4) and are unloaded at the unloading device (4), in the case of which a second transporting unit (2) of the at least two transporting units (1, 2) moves at a second movement speed (vₛₗₐᵥₑ) in the direction of a first transporting unit (1) of the at least two transporting units (1, 2) and, by braking at a braking rate (ra₁, ra₂), is shifted to a predetermined spacing from the first transporting unit (1), **characterized in that**
the braking rate (ra₁, ra₂), during the movement of the second transporting unit, is determined at least once again in dependence on a distance between the second transporting unit (2) and the first transporting unit (1).

2. Method according to Claim 1, in the case of which the first transporting unit (1) moves, at least temporarily, at a first movement speed (vₘₐₛₜₑᵣ).

3. Method according to Claim 2, in the case of which the movement direction of the first transporting unit (1) corresponds to the movement direction of the second transporting unit (2).

4. Method according to one of the preceding claims, in the case of which the predetermined spacing is zero.

5. Method according to one of the preceding claims, in the case of which, during loading of the first transporting unit (1), the second transporting unit (9), by braking at the braking rate (ra₁, ra₂), is arranged upstream at the predetermined spacing from the first transporting unit (1) and, once the first transporting unit (1) has been loaded, is likewise loaded.

6. Method according to one of the preceding claims, **characterized by** the following steps;
a) determining an initial braking distance of the second transporting unit (2) with reference to an initial braking rate (ra₁),
b) determining the current distance between the first transporting unit (1) and the second transporting unit (2),
c) determining a first spacing from the current distance determined in step b) and the predetermined spacing,
d) comparing the initial braking distance determined in step a) with the first spacing determined in step c),
e) initiating braking of the second transporting unit at the initial braking rate (ra₁) if the initial braking distance determined in step a) is greater than or equal to the first spacing determined in step c), or repeating steps b) to d) following a first time interval if the initial braking distance determined in step b) is smaller than the first spacing determined in step c),
f) once again determining the current distance between the first transporting unit and the second unit during braking,
g) determining a second spacing from the current distance determined in step f) and the predetermined spacing,
h) determining an adapted braking rate (ra₂) with reference to an adapted braking distance of the second transporting unit, wherein the adapted braking distance corresponds to the second spacing determined in step g),
i) changing the braking by using the adapted braking rate (ra₂) determined in step h),
j) repeating steps f) to i) following a second time interval.

7. Method according to Claim 6, in the case of which the first and/or the second time interval are/is zero and/or correspond/corresponds to at least one interrogation interval.

8. Packaging machine (100) having at least two transporting units (1, 2), having at least one loading device (3), for loading the transporting units (1, 2), and at least one unloading device (4), for unloading the transporting units (1, 2), having drive means (5, 6), for cyclically transporting the transporting units, and having braking means (5, 6), for braking at least one transporting unit (1, 2) in accordance with a method from claims 1 to 7.

9. Computer program having program coding means in order to implement all the steps of a method according to one of Claims 1 to 7 when the computer program is run on a computer or a corresponding computing unit.

10. Computer program product having program coding means which are stored on a computer-readable data carrier in order to implement all the steps of a method according to one of Claims 1 to 7 when the program coding means are run on a computer or a corresponding computing unit.

## Revendications

1. Procédé de fonctionnement d'une machine à emballer dotée d'au moins deux unités de transport mobiles (1, 2) disposées de manière périodique qui sont chargées de produit à emballer au niveau d'un dispositif de chargement (3), sont déplacées jusqu'à un dispositif de déchargement (4) et sont déchargées au niveau du dispositif de déchargement (4), une deuxième unité de transport (2) parmi les au moins deux unités de transport (1, 2) étant déplacée à une deuxième vitesse de déplacement (vₛₗₐᵥₑ) en direction d'une première unité de transport (1) parmi les au moins deux unités de transport (1, 2) et étant amenée à une distance prédéterminée par rapport à la première unité de transport (1) par freinage à un taux de freinage (ra₁, ra₂),
**caractérisé en ce que**
le taux de freinage (ra₁, ra₂) est déterminé à nouveau au moins une fois en fonction d'une distance de la deuxième unité de transport (2) par rapport à la première unité de transport (1) pendant le déplacement de la deuxième unité de transport.

2. Procédé selon la revendication 1, dans lequel la première unité de transport (1) se déplace au moins par intermittence à une première vitesse de déplacement (vₘₐₛₜₑᵣ).

3. Procédé selon la revendication 2, dans lequel le sens de déplacement de la première unité de transport (1) correspond au sens de déplacement de la deuxième unité de transport (2).

4. Procédé selon l'une quelconque des revendications précédentes, dans lequel la distance prédéterminée est nulle.

5. Procédé selon l'une quelconque des revendications précédentes, dans lequel, pendant le chargement de la première unité de transport (1), la deuxième unité de transport (9) est disposée en amont à la distance prédéterminée par rapport à la première unité de transport (1) par le freinage au taux de freinage (ra₁, ra₂) et est également chargée après le chargement de la première unité de transport (1).

6. Procédé selon l'une quelconque des revendications précédentes, **caractérisé par** les étapes suivantes :
a) déterminer une distance de freinage initiale de la deuxième unité de transport (2) à l'aide d'un taux de freinage initial (ra₁),
b) déterminer la distance instantanée de la première unité de transport (1) par rapport à la deuxième unité de transport (2),
c) déterminer une première distance à partir de la distance instantanée déterminée à l'étape b) et de la distance prédéterminée,
d) comparer la distance de freinage initiale déterminée à l'étape a) à la première distance déterminée à l'étape c),
e) déclencher un freinage de la deuxième unité de transport au taux de freinage initial (ra₁) si la distance de freinage déterminée à l'étape a) est supérieure ou égale à la première distance déterminée à l'étape c), ou répéter les étapes b) à d) après un premier intervalle de temps si la distance de freinage initiale déterminée à l'étape b) est inférieure à la première distance déterminée à l'étape c),
f) déterminer à nouveau la distance instantanée de la première unité de transport par rapport à la deuxième unité pendant le freinage,
g) déterminer une deuxième distance à partir de la distance instantanée déterminée à l'étape f) et de la distance prédéterminée,
h) déterminer un taux de freinage adapté (ra₂) à l'aide d'une distance de freinage adaptée de la deuxième unité de transport, la distance de freinage adaptée correspondant à la deuxième distance déterminée à l'étape g),
i) modifier le freinage en utilisant le taux de freinage adapté (ra₂) déterminé à l'étape h),
j) répéter les étapes f) à i) après un deuxième intervalle de temps.

7. Procédé selon la revendication 6, dans lequel le premier et/ou le deuxième intervalle de temps sont nuls et/ou correspondent à au moins un intervalle d'interrogation.

8. Machine à emballer (100), qui comprend au moins deux unités de transport (1, 2), au moins un dispositif de chargement (3) pour le chargement des unités de transport (1, 2) et au moins un dispositif de déchargement (4) pour le déchargement des unités de transport (1, 2), des moyens d'entraînement (5, 6) pour transporter périodiquement les unités de transport et des moyens de freinage (5, 6) pour freiner au moins une unité de transport (1, 2) conformément à un procédé selon les revendications 1 à 7.

9. Programme informatique comprenant des moyens de code de programme afin de mettre en oeuvre toutes les étapes d'un procédé selon l'une des revendications 1 à 7 lorsque le programme informatique est exécuté sur un ordinateur ou une unité de calcul correspondante.

10. Produit-programme informatique comprenant des moyens de code de programme qui sont enregistrés sur un support de données lisible par ordinateur afin de mettre en oeuvre toutes les étapes d'un procédé selon l'une des revendications 1 à 7 lorsque les moyens de code de programme sont exécutés sur un ordinateur ou une unité de calcul correspondante.
